# EUROPEAN PATENT SPECIFICATION

(11) **EP 0 973 283 B1**
(45) Date of publication and mention of the grant of the patent: **19.05.2004**
(21) Application number: 98401785.5
(22) Date of filing: 15.07.1998
(51) Int. Cl.: H04B 17/00, H04B 7/06, H04B 7/10

(54) **Probing apparatus and method for a spread-spectrum communications system**
Verfahren und Vorrichtung zur Ermittlung für ein Spreizspektrumübertragungssystem
Méthode et appareil de détermination pour un système de communication à spectre étalé

(43) Date of publication of application: 19.01.2000
(73) Proprietor: MOTOROLA, INC., Schaumburg, IL 60196 (US)
(72) Inventor: Boixadera Espax, Francesc, 92290 Chatenay-Malabry (FR); Farmine, Yann, 78740 Vaux sur Seine (FR); Whinnett, Nicholas, 75005 Paris (FR)
(74) Representative: Litchfield, Laura Marie

(56) References cited:
- EP-A- 0 782 275
- EP-A- 0 836 288
- US-A- 4 227 249
- US-A- 5 471 647
- GERLACH D.; PAULRAJ A.: 'Adaptive Transmitting Antenna Arrays with Feedback' IEEE SIGNAL PROCESSING LETTERS vol. 1, no. 10, 01 October 1994, NEW YORK, US, pages 150 - 152

## Description

### Field of the Invention

The present invention relates to a probing apparatus and method for transmitting a signal including user data in a spread-spectrum communications system, for example, a Code Division Multiple Access (CDMA) communications system.

### Background of the Invention

Antenna arrays can be used by a base station and/or a mobile terminal in CDMA systems.

In order to maximise the quality of signals received at the base station, it is necessary to determine the nature of the channels used to transmit data from, for example, the mobile terminal to the base station (hereinafter referred to as the "uplink"). This can be achieved by calculating the impulse response of a particular channel on the uplink. If a knowledge of the impulse response is available, it is possible to calculate weights for the antenna array of the mobile terminal, and thereby achieve the goal of maximising the quality of signals received at the base station.

By maximising the quality of signals received at the base station, the transmission power of the source of the received signals, in this case at the mobile terminal, can be minimised thereby reducing interference in the system and, consequently, increasing system capacity and battery life of the mobile terminal.

In a Frequency Division Duplex (FDD) scheme having antenna arrays, it is known to generate a probing signal on the uplink communication in order to determine an optimum weight vector for transmitting a signal by the mobile terminal. One known technique used to determine the optimum weight vector involves halting the transmission of signals from the antenna array and to excite the antenna array so as to transmit a series of orthogonal and to excite the antenna array so as to transmit a series of orthogonal probing signals on different channels to each other. Such a technique is described in the article entitled "Adaptive Transmission Antenna Array with Feedback" (IEEE Signal Processing Letters, Vol. 1, No. 10, October 1994).

It is desirable to apply a similar technique to a spread-spectrum communications system. However, such a technique as described in the above mentioned article stops transmission of user data (i.e. data relating to the communications between users of telecommunications services, including control data) which is undesirable due to the effects of discontinuous transmissions on power control, switching complexity and time delays of probing.

It is therefore an object of the present invention to obviate or at least mitigate the above mentioned problem relating to spread-spectrum systems having antenna arrays.

### Summary of the Invention

The present invention provides a probing apparatus for a spread-spectrum communications system, a base station and a mobile terminal comprising such apparatus, and a method of transmitting information in a spread-spectrum communications system as described in the accompanying claims.

### Brief Description of the Drawings

FIG. 1 is a schematic diagram of a telecommunications system for use with an embodiment of the present invention;
FIG. 2 is a schematic diagram of an apparatus constituting an embodiment of the present invention;
FIG. 3 is a schematic diagram of another apparatus for use with the apparatus of FIG. 1;

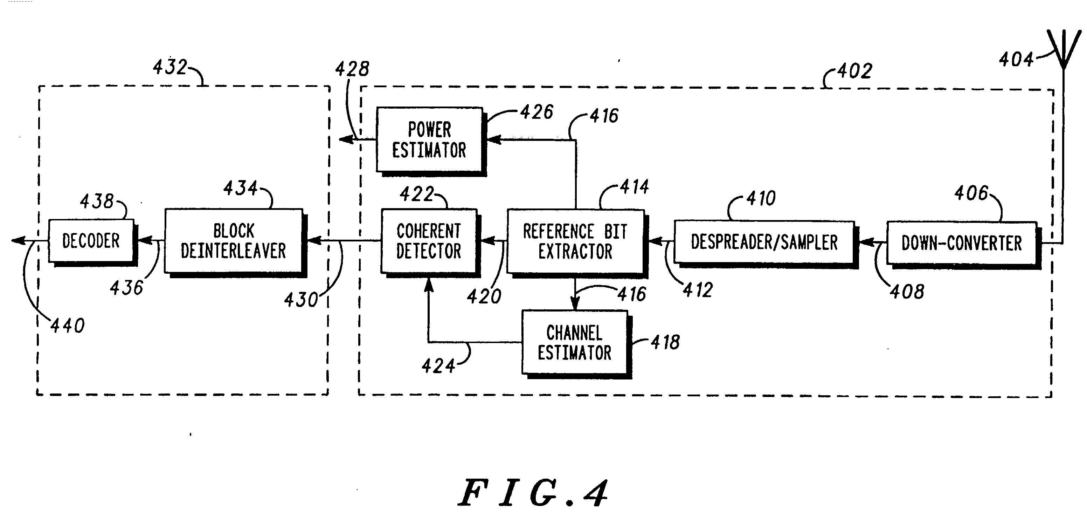

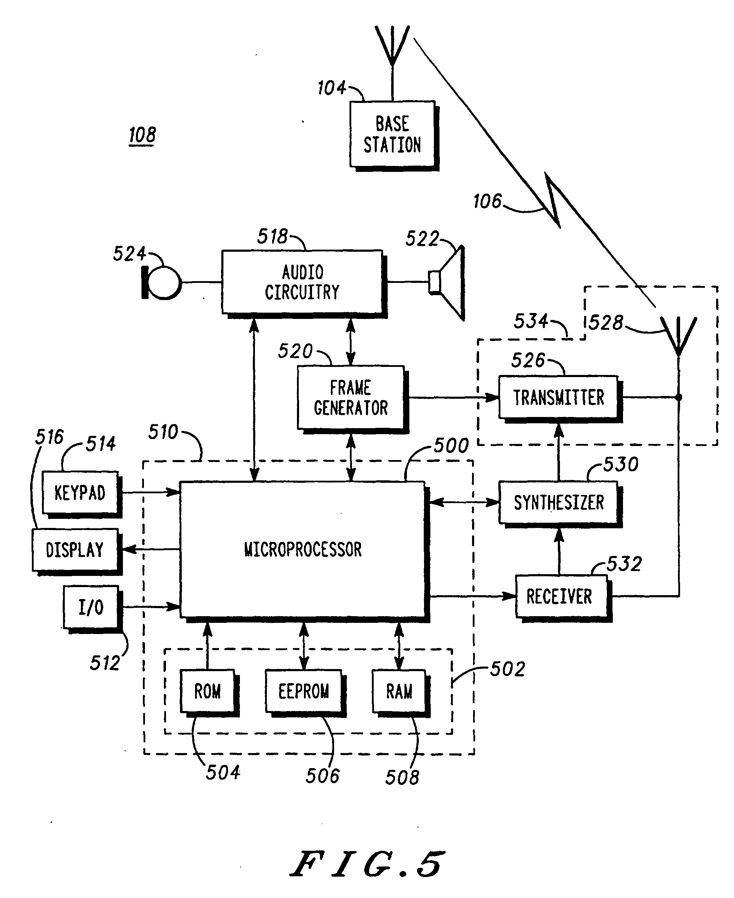

FIG. 4 is a schematic diagram of another apparatus for use with the apparatus of FIG. 1;
FIG. 5 is a schematic diagram of another apparatus for use with the apparatus of FIG. 1;
FIG. 6 is a schematic diagram of an apparatus constituting an embodiment of the present invention;
FIG. 8 is a schematic diagram of defined sequences for use with the apparatus of FIGS. 2 to 10;

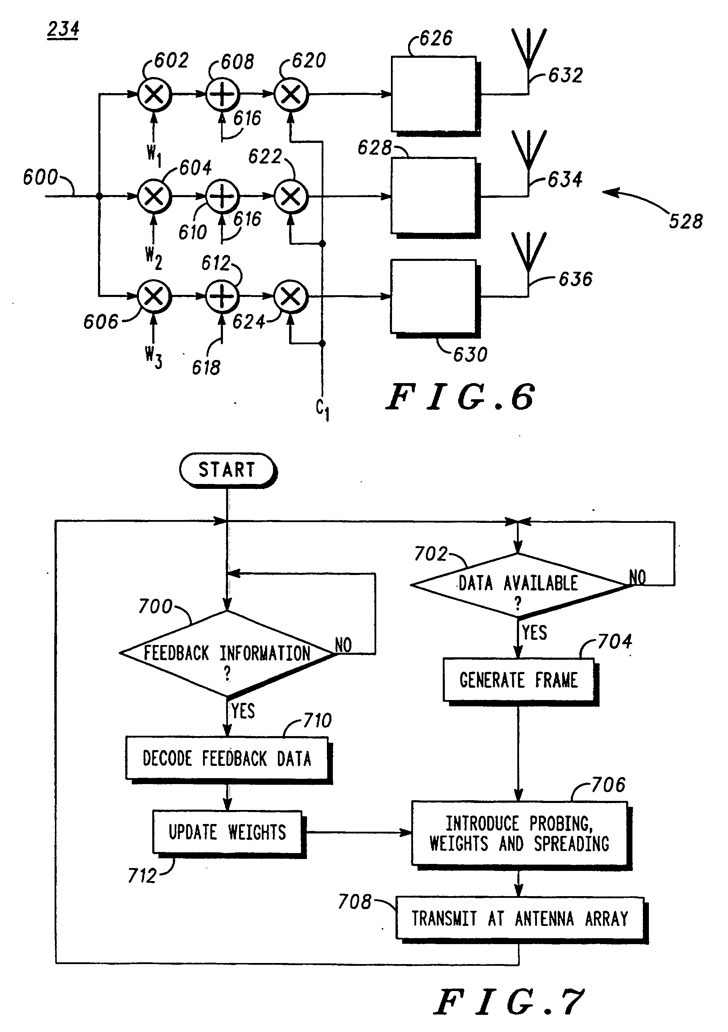

FIG. 7 is a flow diagram of a method constituting an embodiment of the present invention;

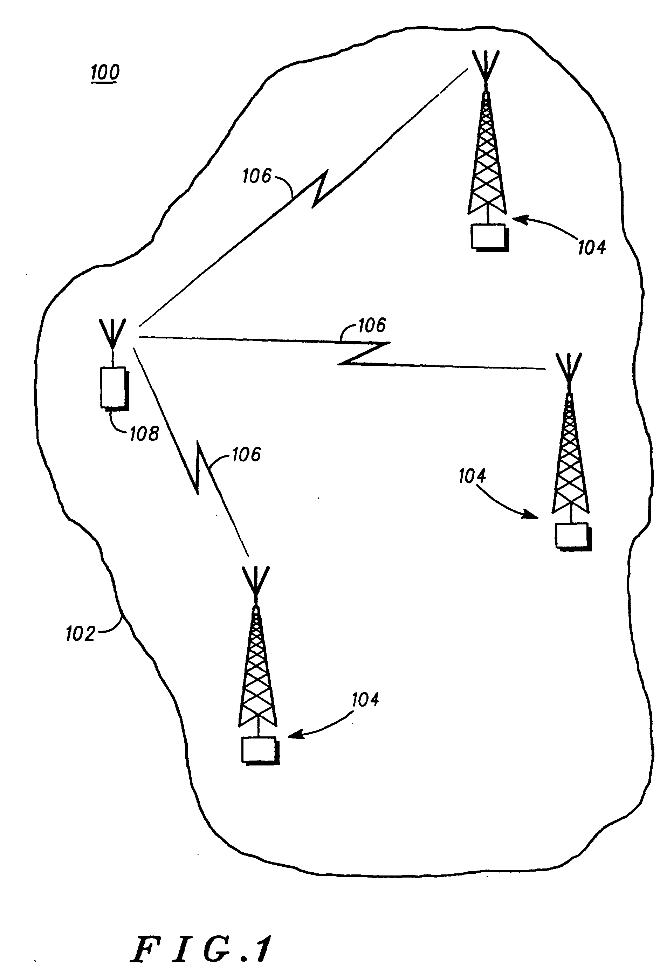

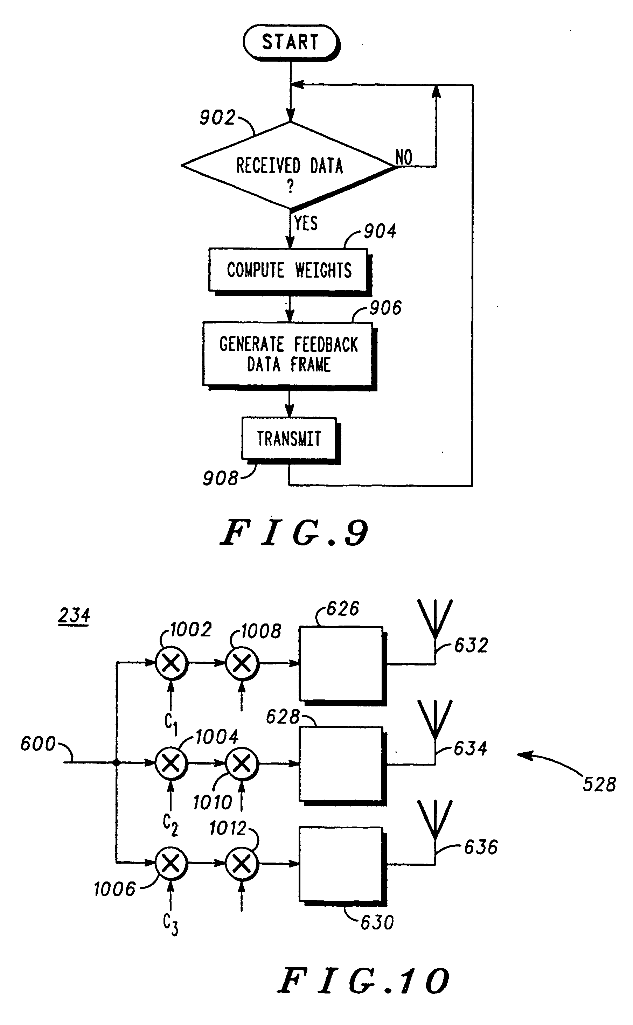

FIG. 9 is a flow diagram of a method for use with the apparatus of FIG. 1, and
FIG. 10 is a schematic diagram of an alternative apparatus constituting an embodiment of the present invention.

### Description of a Preferred Embodiment

Throughout the description and drawings, like reference numerals shall be used to identify like parts.

A spread-spectrum radio communications system, for example, a CDMA cellular telephone system 100 employing an FDD scheme, operates in a geographic area 102, and comprises a set of base stations 104 constituting an active set in communication with a mobile terminal 108, for example, a cellular telephone, via a radio-frequency interface 106.

The set of base stations 104 can be a base station from the Motorola SC series of base stations adapted so as to have the following features, and operates in the following manner. For the purposes of simplicity and clarity of description, a portion of the base stations 104 arranged to transmit and receive signals will be described. Of course, those skilled in the art will appreciate the existence of other components and functions in the base stations 104, but will understand that their functionality does not relate to examples of the present invention and so need not be described.

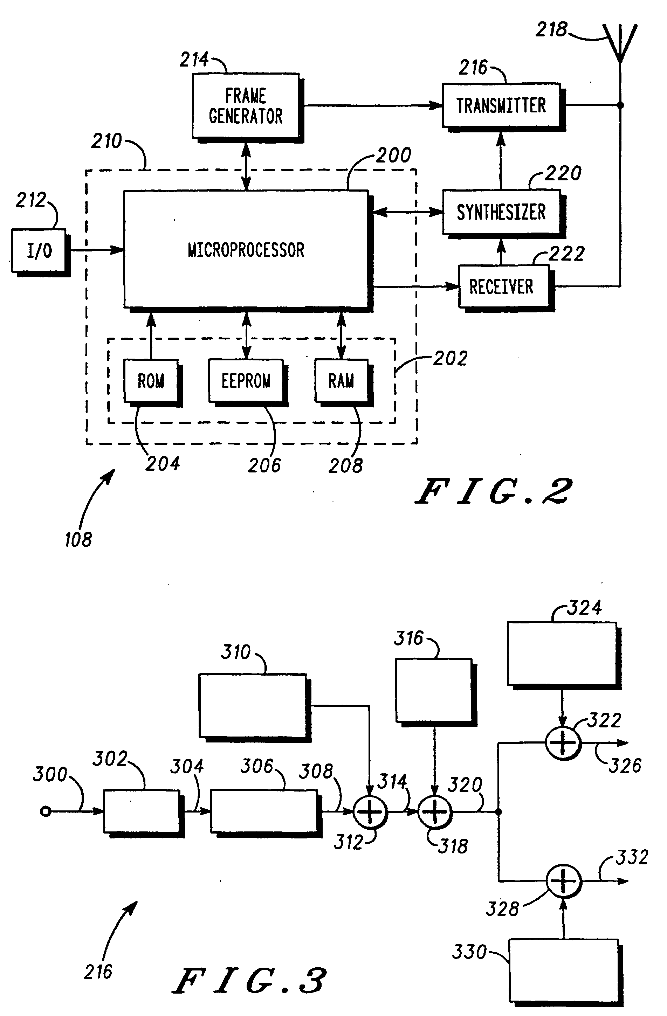

Referring to FIG. 2, each base station in the set of base stations 104 comprises a microprocessor 200 coupled to a memory 202, comprising a Read Only Memory (ROM) 204, an Erasable Electronic Programmable Read Only Memory (EEPROM) 206 and a Random Access Memory (RAM) 208. Preferably, the microprocessor 200, the ROM 204, the EEPROM 206 and the RAM 208 are consolidated into a single package 210 to execute steps necessary to generate the protocol and to perform other functions of each of the base stations 104, such as managing input/output information via a connector 212.

The package 210 is connected to a frame generator 214. The frame generator 214 can be a Complementary Metal-Oxide Semiconductor (CMOS) Application Specific Integrated Circuit (ASIC) available from Motorola, Inc. The frame generator 214 is connected to a transmitter circuit 216.

The transmitter circuit 216 is connected to an antenna 218 and a frequency synthesiser 220, the synthesiser 220 being connected to the package 210 and a receiver circuit 222; the receiver circuit 222 is also connected to the antenna 218.

Referring to FIG. 3, the transmitter circuit 216 comprises an encoder 302 for receiving data bits 300 corresponding to a communication, for example, from a user to a subscriber using the mobile terminal 108. The data bits are received at a particular rate, for example, 9.6 kbps. The data bits can include either voice converted to data by a vocoder, pure data, or a combination of two types of data. The encoder 302 convolutionally encodes the data bits 300 into data symbols at a fixed encoding rate, for example, one data bit to two data symbols so that the encoder 302 outputs data symbols 304 at 19.2 ksym/s rate.

The data symbols 304 are then input into an interleaver 306. The interleaver 306 interleaves the data symbols 304. Interleaved data symbols 308 are output by the interleaver 306 at the same data symbol rate that they were input, for example, 19.2 ksym/s, to one input of an exclusive-OR combiner 312. Reference bits can be added in order to enable coherent detection by the receiver circuit 222.

A long pseudo-noise (PN) generator 310 is operatively coupled to the other input of the exclusive-OR combiner 312 to enhance the security of the communication by scrambling the interleaved data symbols 308. The long PN generator 310 uses a long PN sequence to generate a user specific scrambling sequence, at a rate equal to the data symbol rate of the interleaved data symbols 308 which are input to the exclusive-OR combiner 312, for example, at a rate of 19.2 ksym/s. The scrambled data symbols 314 are output from the exclusive-OR combiner 312 at a fixed rate equal to the rate that the data symbols 308 and are input to one input of the exclusive-OR combiner 318.

A long division channel selection generator 316 provides a particular predetermined length spreading (Walsh) code to an input of another exclusive-OR combiner 318. The code division channel selection generator 316 can provide one of 64 orthogonal codes corresponding to 64 Walsh codes from a 64 by 64 Hadamard matrix, wherein a Walsh code is a single row or column of the matrix. The exclusive-OR combiner 318 uses the particular Walsh code input by the code division channel generator 316 to spread the input scrambled data symbols 314 into Walsh code spread data symbols 320. The Walsh code spread data symbols 320 are output from the exclusive-OR combiner 318 at a fixed rate, for example, 1.2288 Mchips/s.

The Walsh code spread data symbols 320 are provided to an input of two exclusive-OR combiners 322, 328. A pair of short PN sequences, i.e. short when compared to the long PN sequence used by the long PN generator 310, are generated by an I-channel PN generator 324 and a Q-channel PN generator 330. The I-channel and Q-channel PN generators 324, 330 can generate the same or different short PN sequences. The exclusive-OR combiners 322, 328 further spread the input Walsh code spread data 320 with the short PN sequence generated by the PN I-channel generator 324 and the PN Q-channel generator 330, respectively. The resulting I-channel code spread sequence 326 and Q-channel spread code sequence 332 are filtered and used to bi-phase modulate a quadrature pair of sinusoids (in order to generate a carrier signal) by driving the power level controls of a pair of sinusoids. The above described functionality can be provided by the microprocessor 200. The output signals of the sinusoids are summed, translated to an RF frequency, amplified and radiated by an antenna to complete transmission of the data bits 300 via a communication channel (not shown).

The receiver circuit 222 comprises a receiving portion 402 for receiving the transmitted spread-spectrum signal via the RF interface 106 through antenna 404. The received signal is down-converted by down-converter 406, producing a down-converted baseband signal 408. The down-converter 406 transforms the received spread-spectrum signal from the radio frequencies to baseband frequencies as well as other operations, for example, filtering and demodulating. The down-converted signal 408 is sampled into data samples by a despreader and sampler 410. The despreader and sampler 410 can be provided by the microprocessor 200 programmed in accordance with any technique known in the art.

The despreader and sampler 410 samples the received spread-spectrum signal by sampling at a predetermined rate, for example, 1.2288 Megasamples/second. Subsequently, the sampled signal is despread by correlating the received sampled signals with a spreading code formed by combining the long PN sequence, the Walsh code and the short PN sequence. As the despreading operation is well known in the art, it will not be described further in order to maintain simplicity and clarity of description.

The resulting despread sampled signal is further sampled at a predetermined rate, producing a further sample despread signal 412, and output to a reference bit extractor 414, for example, 307.2 kilosamples/second so that a sequence of four samples of the received spread-spectrum signal is despread and/or represented by a single data sample.

The reference bit extractor 414 extracts reference bits 416 from the despread sampled signal 412 and outputs the reference bits 416 to a channel estimator 418. The remaining data samples 420 from the despread sampled signal 412 are output to a coherent detector 422.

The channel estimator 418 correlates the extracted reference bits 416 with a known reference sequence of data samples to obtain unbiased, but noisy, channel estimates. In order to obtain a better channel estimate 424, these noisy estimates may be passed through a low-pass filter, which may be fixed or adaptive, to remove the high frequency noise components. The resulting channel estimates 424 are relatively noise-free and can be used for coherent detection of the symbols.

Power control can also be used to enhance overall performance of the system. The power control algorithm may be very similar to the algorithms used in non-coherent communication systems. In this example, the power control algorithm includes estimating received power every 1.25 ms. The power estimates can be calculated with several different techniques. One technique is to compute a channel estimate with a power estimator 426 by using simply the reference signal samples, i.e. reference bits 416 from reference bit extractor 414 in a 42 bit length block. The square of the magnitude of the channel estimate is then output by the power estimator 426 as the power estimate 428.

The coherent detector 422 multiplies the remaining data samples 420 from the despread sampled signal 412 by the conjugate of the channel estimates 424 to generate coherently detected samples 430.

The data samples 430, which form soft decision data, are then input into a decoding portion 432 including a deinterleaver 434 which deinterleaves the data samples 430. In the deinterleaver 434, the soft decision data 430 are individually input into a matrix which defines a predetermined size block of soft decision data. The soft decision data are input into locations within the matrix so that the matrix is filled in a row by row manner, producing deinterleaved soft decision data 436. The deinterleaved soft decision data 436 are individually output from locations within the matrix so that the matrix is emptied in a column by column manner. The deinterleaved soft decision data 436 are output by the deinterleaver 434 at the same rate that they were input, for example, 28.8 kbits/s.

The predetermined size of the block of soft decision data defined by the matrix is derived from the maximum rate of sampling data samples from the spread-spectrum signal received within a predetermined length transmission block.

The deinterleaved soft decision data 436 are input to a decoder 438 which uses maximum likelihood decoding techniques to generate estimated traffic channel data bits 440. The maximum likelihood decoding techniques can be augmented by using an algorithm which is substantially similar to a Viterbi decoding algorithm.

The above described functionality can be provided by the microprocessor 200.

The cellular telephone 108 can be a StarTAC® cellular telephone manufactured by Motorola, Inc., adapted so as to have the following features and operates in the following manner.

The cellular telephone 108 comprises a microprocessor 500 coupled to a memory 502, comprising a Read Only Memory (ROM) 504, an Erasable Electronic Programmable Read Only Memory (EEPROM) 506 and a Random Access Memory (RAM) 508. Preferably, the microprocessor 500, the ROM 504, the EEPROM 606 and the RAM 508 are consolidated into a single package 510 to execute steps necessary to generate the protocol and to perform other functions of the cellular telephone 108, such as managing input/output information via a connector 512. The package 510 is connected to and is also arranged to manage input/output information via a keypad 514 and a display 516.

The package 510 is connected to audio circuitry 518 directly and via a frame generator 520. The frame generator 520 can be a Complementary Metal-Oxide Semiconductor (CMOS) Application Specific Integrated Circuit (ASIC) available from Motorola, Inc. The frame generator 520 is connected to a transmitter circuit 526. The audio circuitry 518 is connected to a loudspeaker 522 and a microphone 524.

The transmitter circuit 526 is connected to an antenna array 528 and a frequency synthesiser 530, the synthesiser 530 being connected to the package 510 and a receiver circuit 532; the receiver circuit 532 is also connected to the antenna array 528. A portion of the transmitter circuit 526 coupled to antenna array 528 shall hereinafter be referred to as a transmitter block 534 and will now be described in more detail.

Referring to FIG. 6, in a first embodiment of the invention, the transmitter block 534 (of FIG. 5) comprises a first mixer 602, a second mixer 604 and a third mixer 606 capable of receiving subscriber data bits 600 corresponding to audio signals received from the audio circuitry 518 in response to a communication from the subscriber to the user. The subscriber data bits 600 can include either voice converted to data by a vocoder, pure data, or a combination of two types of data. The first second and third mixers 602, 604, 606 apply a first, second and third weight w₁, w₂, w₃, respectively to the subscriber data bits 600. The first, second and third mixers 602, 604, 606 are respectively coupled to a first summation unit 608, a second summation unit 610 and a third summation unit 612 for introducing a respective first, second and third probing components 614, 616, 618. The probing components 614, 616, 618 constitute probing information, such as probing signals.

The first, second and third summation units 608, 610, 612 are respectively coupled to a fourth mixer 620, a fifth mixer 622 and a sixth mixer 624 for the introduction of a common spreading code, c₁. The fourth, fifth and sixth mixers 620, 622, 624 are respectively coupled to a first up-converter 626, a second up-converter 628, and a third up-converter 630, the first, second and third up-converters 626, 628, 630 being respectively connected to a first antenna element 632, a second antenna element 634 and a third antenna element 636. The first, second and third antenna elements 632, 634, 636 form the antenna array 528 (of FIG. 5).

The functionality described above with reference to FIG. 6, up to, but not including, the first, second and third up-converters 626, 628, 630 can be provided by the microprocessor 500.

Operation of the first embodiment of the invention will now be described with reference to FIG. 6.

For the purpose of brevity and clarity of description, operation of the above apparatus will only be described in the context of the mobile terminal 108 transmitting to the base station 104. It should be appreciated that transmissions from at least one of the base station 104 to the mobile terminal 108 according to the present invention can be achieved in an analogous manner.

Referring to FIGs. 5 and 7, audio signals generated by the audio circuitry 518, as a result of sound converted into electrical energy by the microphone 524, are processed by the microprocessor 500 in order to generate data which is put into frames (step 704) by the frame generator 520. The technique used for the generation of the data frame is known in the art and will not be described further. The microprocessor 500 then reproduces the data frames, each of which is identical to the others, so that identical data frames exist for transmission by the first, second and third antenna elements 632, 634, 636.

During operation, the microprocessor 500 of the mobile terminal 108 carries out the following tasks:
1. Awaits a feedback data frame from the base station 104 (step 700), and
2. Awaits audio data from the audio circuitry 518 (step 702).

Upon receipt of the audio data (step 702), the frame generator 520 generates (step 704) a data frame constituting the subscriber data bits 600 (FIG. 6).

The microprocessor 500, by means of the first, second and third mixer 602, 604, 606 applies the first, second and third weights w₁, w₂, w₃ to the data frame. The first, second and third weights w₁, w₂, w₃ can have different values. The first, second and third probing signals 614, 616, 618 are then applied to the resultant signals from the first, second and third mixers 602, 604, 606 by the first, second and third summation units 608, 610, 612, respectively, provided by means of the microprocessor 500.

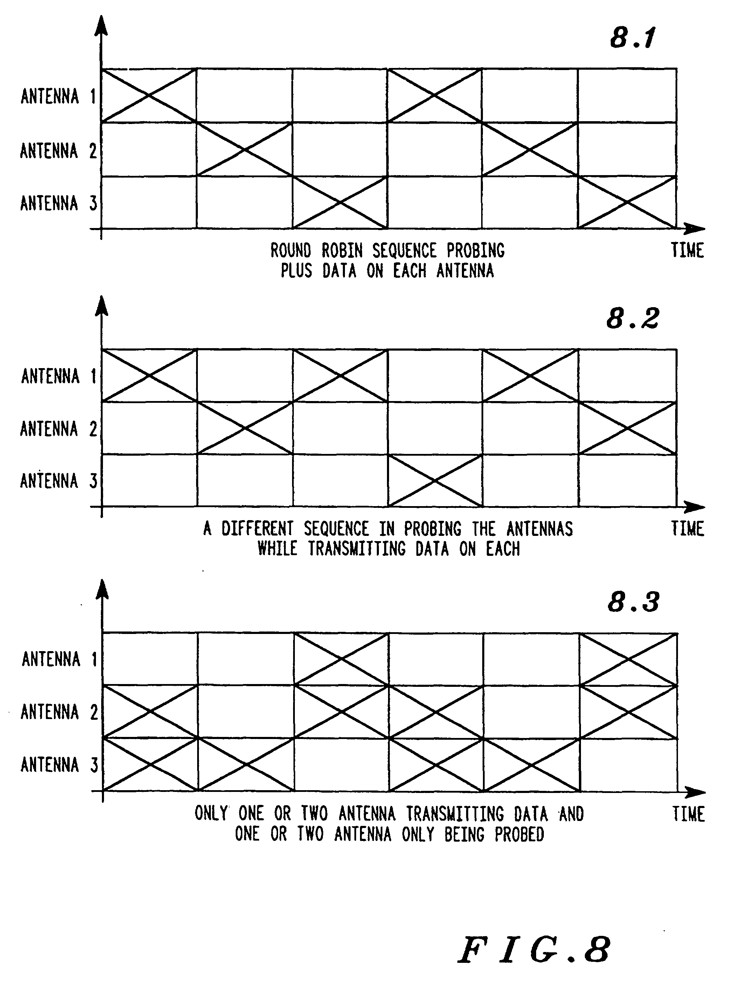

Referring to FIG. 8, the probing signal can be applied to the resultant signals from the first, second and third mixers 602, 604, 606 in a number of different ways. For example, as shown in FIG. 8.1, a first, second and third probing signals p₁, p₂, p₃, are applied to the resultant signals from the first, second and third mixers 602, 604, 606 according to a defined sequence, such as a round-robin sequence, i.e. the first probing signal p₁ is applied to the resultant signal from the first mixer 602, the same first probing signal p₁ is then applied to the resultant signal from the second mixer 604, and then the same first probing signal p₁ is applied to the resultant signal from the third mixer 606, the sequence being repeated as often as necessary.

An alternative defined sequence is shown in FIG. 8.2. The first probing signal p₁ is applied to the resultant signal from the first mixer 602, the same first probing signal p₁ is then applied to the resultant signal from the second mixer 604, the first probing signal p₁ is then applied to the resultant signal from the first mixer 602 again, and then the first probing signal p₁ is applied to the resultant signal from the third mixer 606; this sequence is repeated as often as necessary.

More than one probing signal can be applied to the resultant signals according to a defined sequence. An example of such a scheme, as shown in FIG. 8.3, comprises applying the first probing signal p₁ to the resultant signal from the second mixer 604 and the second probing signal p₂ to the resultant signal from the third mixer 606. The second probing signal p₂ alone is next applied to the resultant signal from the third mixer 606. The first probing signal p₁ is then applied to the resultant signal from the second mixer 604. The above defined sequence is then repeated as often as necessary.

It is also possible to apply the first probing signal p₁ to the resultant signal from the first mixer 602, the second probing signal p₂ to the resultant signal from the second mixer 604, and the third probing signal p₃ to the resultant signal from the third mixer 606, simultaneously.

In each of the above examples described above, the probing signals are transmitted substantially simultaneously with the subscriber data (having similar characteristics to user data). Each probing signal is also substantially orthogonal to the signals transmitted by the antenna elements other than the antenna element transmitting the probing signal.

The spreading code, c₁, is then applied by the fourth, fifth and sixth mixers 620, 622, 624 provided by the microprocessor 500 in order to spread the resultant signals from the first, second and third summation units 608, 610, 612, thereby producing a first, second and third spread signal. The steps of applying weights, probing signals and spreading are represented by step 706 in FIG. 7. The first, second and third spread signals are input by the first, second and third up-converters 626, 628, 630, respectively, for transmission by the first, second and third antenna elements 632, 634, 636 (step 708). After transmission by the first, second and third antenna elements 632, 634, 636, the mobile terminal 108 continues to await feedback data (step 700) and more audio data (step 702) as described above.

Upon receipt of the feedback data frame (step 700), the feedback data is decoded (step 710) by the microprocessor 500 to determine the first, second and third weights w₁, w₂, w₃ calculated by the base station 104. The first, second and third weights w₁, w₂, w₃ calculated by the base station 104 are applied (step 712) by the microprocessor 500 to the next frame of subscriber data bits 600.

Referring to FIGs. 2 and 9, the base station 104 awaits receipt (step 902) of the first, second and third signals transmitted by the mobile terminal 108. The first, second and third transmitted signals are processed by the microprocessor 200 of the base station 104 to determine (step 904) the first, second and third weights w₁, w₂, w₃ for use by the mobile terminal 108. The determined first, second and third weights w₁, w₂, w₃ are incorporated into the feedback data frame which is generated (step 906) and transmitted (step 908) to the mobile terminal 108. An algorithm to compute the first, second and third weights w₁, w₂, w₃ can be any algorithm known in the art and can be, for example, a maximal ratio combining algorithm.

The feedback data frame transmitted by the base station 104 is received (step 700) by the receiver 532 via the antenna array 528.

In a second embodiment of the present invention (FIG. 10), the transmitter block 534 comprises a first code mixer 1002, a second code mixer 1004 and a third code mixer 1006 capable of receiving the subscriber data bits 600. The first, second and third mixers 1002, 1004, 1006 spread the subscriber data bits 600 with a respective first, second and third spreading code, c₁, c₂, c₃, the first second and third code mixers 1002, 1004, 1006 being respectively coupled to a first mixer 1008, a second mixer 1010 and a third mixer 1012 for applying the first, second and third weights w₁, w₂, w₃ to the spread data. The first, second and third mixers 1008, 1010, 1012 are respectively coupled to the first up-converter 626, the second up-converter 628, and the third up-converter 630, the first, second and third up-converters 626, 628, 630 being respectively connected to the first antenna element 632, the second antenna element 634 and the third antenna element 636.

In this embodiment, instead of applying a probing signal per se, probing information can be introduced into the subscriber data 600, by ensuring orthogonality between at least one of the first, second and third spreading codes c₁, c₂, c₃ and the other spreading codes. For example, the first spreading code c₁ can be orthogonal to the signals spread by the second and third spreading codes c₂, c₃ and transmitted by the second and third antenna elements 634, 636. This means that the first spreading code c₁ is orthogonal to both the second and third spreading codes c₂, c₃. In a further example of the second embodiment of the invention, the second and third spreading codes c₂, c₃ can be substantially the same. The application of the spreading codes can be according to a defined sequence analogous to those described above with reference to the first embodiment. Thus, the orthogonality of the spreading codes to the transmitted signals can change according to a round-robin sequence or any other defined sequence. In a preferred example of the second embodiment, the first, second and third spreading codes c₁, c₂, c₃ are orthogonal to each other. Operation of the second embodiment will now be described with reference to FIGs. 7 and 9.

Audio signals generated by the audio circuitry 518, as a result of sound converted into electrical energy by the microphone 524, are processed by the microprocessor 500 and put into data frames (step 704) by the frame generator 500. The technique used for the generation of the data frame is known in the art and will not be described further. The microprocessor 500 then reproduces the data frame, each of which is identical to the others, so that identical data frames exist for transmission by the first, second and third antenna elements 632, 634, 636.

During operation, the microprocessor 500 of the mobile terminal 108 carries out the following tasks:
1. Awaits a feedback data frame from the base station 104 (step 700), and
2. Awaits audio data from the audio circuitry 518 (step 702).

Upon receipt of the audio data (step 702), the frame generator 520 generates (step 704) a data frame constituting the subscriber data bits 600 (FIG. 6).

The microprocessor 500, by means of the first, second and third mixer 602, 604, 606 applies the first, second and third weights w₁, w₂, w₃ to the data frame. The first, second and third weights w₁, w₂, w₃ can have different values. The first, second and third probing signals 614, 616, 618 are then applied to the resultant signals from the first, second and third mixers 602, 604, 606 by the first, second and third summation units 608, 610, 612, respectively, provided by means of the microprocessor 500.

The first, second and third spreading codes, c₁, c₂, c₃ are then applied by the fourth, fifth and sixth mixers 620, 622, 624, respectively, according to any one of the above described sequences. The first, second and third spreading codes c₁, c₂, c₃ can be provided by the microprocessor 500 in order to spread the resultant signals from the first, second and third summation units 608, 610, 612, thereby producing a first, second and third spread signal. The steps of applying weights, probing signals and spreading are represented by step 706 in FIG. 7. The first, second and third spread signals are input by the first, second and third up-converters 626, 628, 630, respectively, for transmission by the first, second and third antenna elements 632, 634, 636 (step 708). After transmission by the first, second and third antenna elements 632, 634, 636, the mobile terminal 108 continues to await feedback data (step 700) and more audio data (step 702) as described above.

Upon receipt of the feedback data frame (step 700), the feedback data is decoded (step 710) by the microprocessor 500 to determine the first, second and third weights w₁, w₂, w₃ calculated by the base station 104. The first, second and third weights w₁, w₂, w₃ calculated by the base station 104 are applied (step 712) by the microprocessor 500 to the next frame of subscriber data bits 600.

Referring to FIGs. 2 and 9, the base station 104 awaits receipt (step 902) of the first, second and third signals transmitted by the mobile terminal 108. The first, second and third transmitted signals are processed by the microprocessor 200 of the base station 104 to determine (step 904) the first, second and third weights w₁, w₂, w₃ for use by the mobile terminal 108. The determined first, second and third weights w₁, w₂, w₃ are incorporated into the feedback data frame which is generated (step 906) and transmitted (step 908) to the mobile terminal 108. As stated above, the algorithm to compute the first, second and third weights w₁, w₂, w₃ can be any algorithm known in the art and can be, for example, a maximal ratio combining algorithm.

The feedback data frame transmitted by the base station 104 is received (step 700) by the receiver 532 via the antenna array 528.

Although the above embodiments have been described in relation to a spread-spectrum communication system, in particular, a CDMA system, it should be appreciated that the present invention is not limited to such systems and applications to other systems which employ orthogonal transmission techniques envisaged.

## Claims

1. A probing apparatus for a spread-spectrum communications system comprising an antenna array including at least first and second antenna elements (632 to 636) arranged to transmit first and second signals comprising data (600) and probing information (614 to 618; c₁ to c₃), **characterised by** being arranged to transmit said data (600) in said first and second signals simultaneously from said first and second antenna elements (632 to 636) respectively, and by being arranged to transmit said probing information (614 to 618; c₁ to c₃) is transmitted at least in said first signal, said probing information of said first signal being simultaneous and substantially orthogonal to said second signal.

2. An apparatus as claimed in Claim 1, wherein said probing information comprises at least one probing signal (614 to 618).

3. An apparatus as claimed in Claim 2, comprising first and second weighting means (602 to 606) for applying respective weights to said data (600), first and second probe means (608 to 612) for selectively introducing said probing signal (614 to 618) into the weighted data, and first and second transmission means (620 to 630) responsive to said probe means for producing said first and second signals, respectively, at said first and second antenna elements (632 to 636).

4. An apparatus as claimed in Claim 3, wherein said probing signal (614 to 618) is substantially orthogonal to the data (600).

5. An apparatus as claimed in any preceding Claim, wherein said second signal also comprises probing information that is orthogonal to the probing information of said first signal.

6. An apparatus as claimed in Claim 1, comprising first and second spreading means (1002 to 1006) for using first and second spreading codes (c₁ to c₃) in producing said first and second signals respectively, the probing information of said first signal comprising said first spreading code, and said first spreading code being substantially orthogonal to said second spreading code.

7. An apparatus as claimed in Claim 6, wherein the second spreading code comprises the first spreading code with a time delay.

8. An apparatus as claimed in any of Claims 1 to 4, wherein said probing information (614 to 618; c₁ to c₃) is selectively transmitted by said antenna elements according to a defined sequence.

9. An apparatus as claimed in Claim 8, wherein the defined sequence scheme is a round-robin scheme (8.1).

10. An apparatus as claimed in any of the preceding claims, wherein the probing information (614 to 618; c₁ to c₃) is used to define feedback information for transmission of said first and second signals.

11. A base station comprising the apparatus as claimed in any one of Claims 1 to 10.

12. A mobile terminal comprising the apparatus as claimed in any one of Claims 1 to 10.

13. A method of transmitting information in a spread-spectrum communications system from an antenna array including at least first and second antenna elements (632 to 636), comprising transmitting first and second signals comprising data (600) and probing information (614 to 618; c₁ to c₃) from said first and second antenna elements,
**characterised by**:
transmitting said data in said first and second signals simultaneously from said first and second antenna elements (632 to 636) respectively, and at least said first signal comprising said probing information (614 to 618; c₁ to c₃), said probing information of the first signal being substantially orthogonal to the second signal.

## Patentansprüche

1. Prüfvorrichtung ("probing") für ein Spreizspektrum-Kommunikationssystem mit einer Antennenanordnung, die wenigstens ein erstes und ein zweites Antennenelement (632 bis 636) enthält, die geeignet sind, um erste und zweite Signale mit Daten (600) und Prüfinformation (614 bis 618; c₁ bis c₃) zu senden, **dadurch gekennzeichnet, dass** sie geeignet ist, um die Daten (600) in dem ersten und dem zweiten Signal gleichzeitig von dem ersten bzw. dem zweiten Antennenelement (632 bis 636) auszusenden und geeignet ist, um die Prüfinformation (614 bis 618; c₁ bis c₃) wenigstens in dem ersten Signal zu senden, wobei die Prüfinformation des ersten Signals gleichzeitig und im Wesentlichen orthogonal zu dem zweiten Signal ist.

2. Vorrichtung nach Anspruch 1, wobei die Prüfinformation wenigstens ein Prüfsignal (614 bis 618) aufweist.

3. Vorrichtung nach Anspruch 2 mit einem ersten und einem zweiten Gewichtungsmittel (602 bis 606), um jeweilige Gewichte auf die Daten (600) anzuwenden, ersten und zweiten Prüfmitteln (608 bis 612) zum selektiven Einführen der Prüfsignale (614 bis 618) in die gewichteten Daten und ersten und zweiten Sendemitteln (620 bis 630), die auf die Prüfmittel zum Erzeugen des ersten bzw. des zweiten Signals bei dem ersten und zweiten Antennenelement (632 bis 636) ansprechen.

4. Vorrichtung nach Anspruch 1, wobei das Prüfsignal (614 bis 618) im Wesentlichen orthogonal zu den Daten (600) ist.

5. Vorrichtung nach einem der vorangehenden Ansprüche, wobei das zweite Signal auch Prüfinformation aufweist, die orthogonal zu der Prüfinformation des ersten Signals ist.

6. Vorrichtung nach Anspruch 1 mit einem ersten und einem zweiten Spreizmittel (1002 bis 1006) zur Verwendung eines ersten und eines zweiten Spreizcodes (c₁ bis c₃) beim Erzeugen des ersten bzw. des zweiten Signals, wobei die Prüfinformation des ersten Signals den ersten Spreizcode aufweist und der erste Spreizcode im Wesentlichen orthogonal zu dem zweiten Spreizcode ist.

7. Vorrichtung nach Anspruch 6, wobei der zweite Spreizcode den ersten Spreizcode mit einer Zeitverzögerung umfasst.

8. Vorrichtung nach einem der Ansprüche 1 bis 4, wobei die Prüfinformation (614 bis 618; c₁ bis c₃) selektiv durch die Antennenelemente gemäß einer definierten Abfolge gesendet wird.

9. Vorrichtung nach Anspruch 8, wobei das definierte Abfolgeschema ein "round-robin"-Schema (8.1) ist.

10. Vorrichtung nach einem der vorangehenden Ansprüche, wobei die Prüfinformation (614 bis 618; c₁ bis c₃) verwendet wird, um Rückkopplungsinformation für das Senden des ersten und des zweiten Signals zu definieren.

11. Basisstation mit der Vorrichtung nach einem der Ansprüche 1 bis 12.

12. Mobiles Endgerät mit einer Vorrichtung nach einem der Ansprüche 1 bis 12.

13. Verfahren zum Senden von Information in einem Spreizspektrum-Kommunikationssystem von einer Antennenanordnung mit wenigstens einem ersten und einem zweiten Antennenelement (632 bis 636), das das Senden von ersten und zweiten Signalen mit Daten (600) und Prüfinformation (614 bis 618; c₁ bis c₃) von dem ersten und dem zweiten Antennenelement umfasst,
**dadurch gekennzeichnet,**
**dass** die Daten in dem ersten und dem zweiten Signal von dem ersten bzw. dem zweiten Antennenelement (632 bis 636) gleichzeitig gesendet werden und wenigstens das erste Signal die Prüfinformation (614 bis 618; c₁ bis c₃) enthält, wobei die Prüfinformation des ersten Signals im Wesentlichen orthogonal zu dem zweiten Signal ist.

## Revendications

1. Appareil de sondage pour un système de communication à spectre étalé, ayant une antenne-réseau, comprenant au moins un premier et un deuxième éléments d'antenne (632 à 636) agencés de manière à transmettre des premier et deuxième signaux contenant des données (600) et des informations de sondage (614 à 618 ; c₁ à c₃), **caractérisé en ce qu'**il est agencé de manière à transmettre lesdites données (600) dans lesdits premier et deuxième signaux simultanément, par l'intermédiaire, respectivement, desdits premier et deuxième éléments d'antenne (632 à 636), et **en ce qu'**il est agencé de manière à transmettre lesdites informations de sondage (614 à 618 ; c₁ à c₃) au moins dans ledit premier signal, lesdites informations de sondage dudit premier signal étant simultanées et essentiellement orthogonales audit deuxième signal.

2. Appareil selon la revendication 1, dans lequel lesdites informations de sondage comprennent au moins un signal de sondage (614 à 618).

3. Appareil selon la revendication 2, comprenant des premiers et deuxièmes moyens de pondération (602 à 606) destinés à appliquer des poids respectifs auxdites données (600), des premiers et deuxièmes moyens de sondage (608 à 612) destinés à introduire de manière sélective ledit signal de sondage (614 à 618) dans lesdites données pondérées, et des premiers et deuxièmes moyens de transmission (620 à 630) réagissant selon lesdits moyens de sondage pour produire lesdits premier et deuxième signaux, respectivement, au niveau desdits premier et deuxième éléments d'antenne (632 à 636).

4. Appareil selon la revendication 3, dans lequel ledit signal de sondage (614 à 618) est essentiellement orthogonal aux données (600).

5. Appareil selon l'une quelconque des revendications précédentes, dans lequel ledit deuxième signal comprend également des informations de sondage qui sont orthogonales aux informations de sondage dudit premier signal.

6. Appareil selon la revendication 1, comprenant des premiers et deuxièmes moyens d'étalement (1002 à 1006) destinés à utiliser des premier et deuxième codes d'étalement (c₁ à c₃) pour produire, respectivement, lesdits premier et deuxième signaux, les informations de sondage dudit premier signal comprenant ledit premier code d'étalement, et ledit premier code d'étalement étant essentiellement orthogonal audit deuxième code d'étalement.

7. Appareil selon la revendication 6, dans lequel le deuxième code d'étalement comprend le premier code d'étalement avec une temporisation.

8. Appareil selon l'une quelconque des revendications 1 à 4, dans lequel lesdites informations de sondage (614 à 618 ; c₁ à c₃) sont transmises de manière sélective par lesdits éléments d'antenne, selon une séquence définie.

9. Appareil selon la revendication 8, dans lequel le séquencement défini est un séquencement par permutation circulaire (8.1).

10. Appareil selon l'une quelconque des revendications précédentes, dans lequel les informations de sondage (614 à 618 ; c₁ à c₃) sont utilisées pour définir des informations en retour pour la transmission desdits premier et deuxième signaux.

11. Station de base comprenant l'appareil selon l'une quelconque des revendications 1 à 10.

12. Terminal mobile comprenant l'appareil selon l'une quelconque des revendications 1 à 10.

13. Procédé de transmission d'informations dans un système de communication à spectre étalé, par l'intermédiaire d'une antenne-réseau comprenant au moins un premier et un deuxième éléments d'antenne (632 à 636), comprenant la transmission des premier et deuxième signaux contenant des données (600) et des informations de sondage (614 à 618 ; c₁ à c₃) par lesdits premier et deuxième éléments d'antenne, **caractérisé par** :
la transmission desdites données dans lesdits premier et deuxième signaux, simultanément, par l'intermédiaire, respectivement, desdits premier et deuxième éléments d'antenne (632 à 636), au moins ledit premier signal comprenant lesdites informations de sondage (614 à 618 ; c₁ à c₃), et lesdites informations de sondage dudit premier signal étant essentiellement orthogonales audit deuxième signal.
